# EUROPEAN PATENT SPECIFICATION

(11) **EP 4 456 300 B1**
(45) Date of publication and mention of the grant of the patent: **01.07.2026**
(21) Application number: 22922625.3
(22) Date of filing: 25.01.2022
(51) Int. Cl.: H01M 50/358, H01M 50/367, H01M 50/30, H01M 50/383, A62C 3/16, A62C 35/10, H01M 10/613, H01M 10/625, H01M 50/209, H01M 50/249, H01M 50/298, H01M 50/342

(54) **BATTERY, ELECTRIC DEVICE, AND BATTERY MANUFACTURING METHOD AND DEVICE**
BATTERIE, ELEKTRISCHE VORRICHTUNG SOWIE BATTERIEHERSTELLUNGSVERFAHREN UND -VORRICHTUNG
BATTERIE, DISPOSITIF ÉLECTRIQUE AINSI QUE PROCÉDÉ ET DISPOSITIF DE FABRICATION DE BATTERIE

(43) Date of publication of application: 30.10.2024
(73) Proprietor: Contemporary Amperex Technology (Hong Kong) Limited, Central, Central And Western District (HK)
(72) Inventor: WU, Linshan, Ningde City, Fujian 352100 (CN)
(74) Representative: Rowlands, Stuart Michael
(86) International application number: PCT/CN2022/073858
(87) International publication number: WO 2023/141774

(56) References cited:
- CN-A- 111 106 278
- CN-A- 111 640 888
- CN-A- 111 952 515
- CN-A- 112 018 299
- CN-A- 112 086 604
- CN-A- 112 086 605
- CN-A- 112 086 605
- CN-U- 215 578 941
- DE-A1- 102019 207 084

## Description

### FIELD OF TECHNOLOGY

The present application relates to the technical field of batteries, particularly to a battery, an electricity consumption device and a method and device for manufacturing the battery.

### BACKGROUND

Energy conservation and emission reduction is the key to sustainable development of the automobile industry. In this case, electric vehicles have become an important part in sustainable development of the automobile industry by virtue of their advantages of energy conservation and environmental protection. For electric vehicles, battery technique is again another vital factor for its development.

In the development of battery technologies, besides improvement of performance of a battery, the safety problem is a nonnegligible problem. If the safety problem of the battery cannot be solved, the battery cannot be used. Therefore, the technical problem to be solved in battery technology is how to enhance the safety of the battery.
DE 10 2019 207084 A1 discloses a battery module (10) with at least one battery cell (12), wherein the battery cell (12) has a cell housing (16) which has a bottom side (16a) and an upper side (16b) opposite the bottom side (16a) in a first direction (z), wherein an opening (18) which can be opened in the event of an overpressure in the battery cell (12) is arranged in the upper side (16b).
CN 112 086 604 A discloses a battery that includes: a battery cell including a pressure relief mechanism for actuating to release an internal pressure or temperature of the battery cell when the internal pressure or temperature reaches a threshold value; a fire-fighting pipeline which is used for containing a fire-fighting medium.

### SUMMARY

The present application provides a battery and an electricity consumption device, wherein the safety of the battery can be improved.

According to the invention, provided is a battery, including a plurality of battery cells arranged in a first direction, where a first wall of each of the battery cells is provided with a pressure relief mechanism configured to actuate to relieve a pressure inside the battery cell when the pressure or a temperature inside the battery cell reaches a threshold; and a protecting component, where the protecting component covers the pressure relief mechanisms of the plurality of battery cells outside the plurality of battery cells and forms an exhaust passage with the first walls of the plurality of battery cells, and the exhaust passage is configured to discharge emissions discharged by the pressure relief mechanisms from both ends of the exhaust passage in the first direction when the pressure relief mechanisms actuate.

Therefore, the battery in the embodiment of the present application is provided with the protecting component which covers the plurality of battery cells arranged in the first direction. Thus, the protecting component extends in the first direction, so that the exhaust passage formed by the protecting component extends in the first direction. Thus, when the pressure relief mechanism actuates, the emissions discharged by the pressure relief mechanism can be discharged from both ends of the exhaust passage in the first direction, so that a purpose of discharging the emissions directionally is achieved. The emissions can be discharged timely, and the emissions can also be prevented from flying apart randomly towards other directions to damage other components in the battery. For example, the emissions can be prevented from being in lap joint to a high tension loop in the battery, so the risk of secondary ignition is reduced, and therefore, safety problems such as battery explosion can be effectively avoided.

In some embodiments, the battery further includes a fire fighting pipeline, configured to accommodate a fire fighting medium and to discharge the fire fighting medium when the pressure relief mechanisms actuate.

In consideration of possible large power and destructive power of the emissions discharged by the pressure relief mechanism and high temperature, the fire fighting pipeline can be arranged in a corresponding position of the pressure relief mechanism of the battery cell. The emissions discharged from the battery cell destroy the fire fighting pipeline when the pressure relief mechanism actuates, so that the fire fighting medium in the fire fighting pipeline is discharged from the destroyed placed of the fire fighting pipeline. The emissions discharged by the pressure relief mechanism are cooled, so that the emissions are less dangerous, and thermal runaway of other battery cells due to thermal diffusion due to the temperature of the emissions being too high is avoided, so that the safety of the battery can be enhanced.

In some embodiments, the protecting component is further configured to limit a position of the fire fighting pipeline. On the one hand, displacement of the fire fighting pipeline can be avoided, and the fire fighting pipeline is prevented from being separated from an original installation position, so that when the pressure relief mechanism actuates, the fire fighting pipeline can be smoothly and accurately destroyed, the emissions discharged by the pressure relief mechanism are cooled timely, and thus, the safety performance of the battery is improved. On the other hand, there is no need to additionally arrange a component configured to fix the fire fighting pipeline, so that the processing and installation processes are simplified. In addition, in consideration of the weak rigidity of the fire fighting pipeline, when the pressure relief mechanism actuates, the discharged emissions rush into the fire fighting pipeline, which may cause large area deformation of the fire fighting pipeline. The flow-out position of the fire fighting mechanism inside is uncertain, the protecting component limits the position of the fire fighting pipeline. The destroyed position and direction of the fire fighting pipeline can also be limited, and it is guaranteed that the fire fighting medium inside can flow to the area of the pressure relief mechanism, so that the cooling effect of the fire fighting medium discharged by the fire fighting pipeline is improved.

In some embodiments, the fire fighting pipeline is arranged corresponding to the pressure relief mechanisms of the plurality of battery cells and extends in the first direction. Thus, there are many fire fighting mediums stored in the fire fighting pipeline, and it is further guaranteed that when thermal runaway occurs on any one battery cell, there is an area of the fire fighting pipeline corresponding to the battery cell and the area is destroyed, and the discharged fire fighting medium cools the emissions of the battery cell timely.

According to the invention, the battery further includes a wire harness segregation board, arranged on a surface, facing an exterior of the battery cell, of the first wall.

There may be a large number of components such as converging components or circuit boards connecting the battery cells, with a large area arranged, so that the components can be integrated through the wire harness segregation board, and thus, the plurality of battery cells are assembled more conveniently.

According to the invention, the protecting component includes a top wall, a first side wall, and a second side wall; the top wall is arranged opposite to the pressure relief mechanisms of the plurality of battery cells; the top wall is configured to connect the first side wall and the second side wall; and the first side wall and the second side wall are connected to the wire harness segregation board, respectively. The exhaust passage formed by a plurality of walls is processed conveniently and is more stable.

In some embodiments, the first side wall and/or the second side wall are provided with a plurality of first through holes, and the first through holes are configured to relieve the pressures inside the battery cells when the pressure mechanisms actuate.

In consideration of instantaneous discharge of the emissions by the battery cell subjected to thermal runawaythermal runaway, the emissions may include a lot of high-temperature gases. The emissions are only discharged from both ends of the protecting component, which may cause the problem of late discharge. Therefore, a plurality of first through holes can be formed to discharge a part of gases. On the one hand, the internal pressure of the battery cell subjected to thermal runawaythermal runaway is reduced timely, so that explosion due to overpressure is avoided. On the other hand, since the first through holes feature small size, large fragmental emissions will not be discharged, so that other components will not be affected greatly.

In some embodiments, the pore diameter of the first through holes is less than or equal to 10 mm. A condition that when the pore diameter is great, oversized fragments in the emissions discharged by the pressure relief mechanism are discharged through the first through holes and may be in lap joint to the high tension loop in the battery to cause short circuiting of the battery and trigger secondary ignition, resulting in battery explosion is avoided.

In some embodiments, the fire fighting pipeline is arranged on a side, close to the battery cells, of the top wall. On the one hand, the fire fighting pipeline is not independently fixed by using an extra fixing structure. Particularly under the circumstance that the wall of the fire fighting pipeline is smooth, the difficulty of fixing the fire fighting pipeline by arranging the buckle and the like is great, and the fire fighting pipeline fixed by the protecting component is processed and assembled more conveniently. On the other hand, the fire fighting pipeline is fixed relative to the top wall and is more stable, so that the integral rigidity of the fire fighting pipeline can be improved through the protecting component, and thus, the fire fighting pipeline is prevented from deviating. Particularly when the pressure relief mechanism actuates, the emissions are located in the exhaust passage formed by the protecting component, so that the discharged emissions can rapidly and accurately destroy the fire fighting pipeline to accelerate the destroying speed to cool the battery timely. The emissions are further prevented from breaking the fire fighting pipeline, so that the reliability of thermal runawaythermal runaway management and control is enhanced.

In some embodiments, the fire fighting pipeline is arranged on a side of the top wall away from the battery cells; the top wall is provided with a plurality of pressure relief areas; the plurality of pressure relief areas are in a one-to-one correspondence to the pressure relief mechanisms of the plurality of battery cells; and the pressure relief areas are configured to enable the emissions from the battery cells to destroy the fire fighting pipeline through the pressure relief areas when the pressure relief mechanisms actuate.

When thermal runawaythermal runaway does not occur on the battery cell, the fire fighting pipeline is fixed relative to the top wall and is more stable, so that the integral rigidity of the fire fighting pipeline can be improved through the protecting component, and thus, the fire fighting pipeline is prevented from deviating. Particularly when the pressure relief mechanism actuates, the discharged emissions can be excluded through the exhaust passage formed by the protecting component, so that the discharged emissions can rapidly and accurately destroy the fire fighting pipeline, and the fire fighting medium in the fire fighting pipeline can cool the battery timely to prevent diffusion of thermal runawaythermal runaway.

In some embodiments, each of the pressure relief areas is a weak area on the top wall, and the weak area is configured to be destroyed by the emissions from the battery cells when the pressure relief mechanisms actuate. The pressure relief area is relatively sealed when the corresponding pressure relief mechanism is not destroyed, so that the strength of the protecting component is kept.

In some embodiments, the pressure relief area is a second through hole in the top wall, so that the emissions can pass rapidly to destroy the fire fighting pipeline.

In some embodiments, a length of the pressure relief area in a second direction is less than or equal to that of the fire fighting pipeline in the second direction, the second direction being perpendicular to the first direction and parallel to the first wall.

The size of the pressure relief area shall not be too large, so that a condition that other components in the battery are affected since the oversized emissions fly away in the pressure relief area is avoided. Moreover, if the pressure relief area is oversized, when the pressure relief mechanism actuates, the pressure relief area in a large area will be destroyed, the exhaust passage formed by the protecting component fails, and the emissions cannot be discharged directionally, so that the safety of the battery is affected.

In some embodiments, the fire fighting pipeline is the top wall. The protecting component and the fire fighting pipeline are combined into an integrated structure, which not only facilitates processing, but also saves the original space where the top wall is arranged, thereby improving the spatial utilization ratio.

According to the invention, a value range of an included angle between the first side wall and the wire harness segregation board is [30°, 90°]; and/or a value range of an included angle between the second side wall and the wire harness segregation board is [30°, 90°].

The included angle between the first side wall and the wire harness segregation board and/or the included angle between the second side wall and the wire harness segregation board shall not be too large, and if the included angles are too large, the size of the protecting component in the height direction of the battery will be increased and the total size of the battery in the height direction will be increased, so the energy density of the battery will be reduced; but, the included angles shall not be too small, if the included angles are too small, the exhaust passage formed by the protecting component is too small, which is harmful to discharge the emissions timely and may cause diffusion of thermal runawaythermal runaway, further resulting in battery explosion.

In some embodiments, an end, close to the wire harness segregation board, of the first side wall is provided with a first connecting portion, the first connecting portion is parallel to the wire harness segregation board, and the first side wall is fixed to the wire harness segregation board through the first connecting portion; and/or an end, close to the wire harness segregation board, of the second side wall is provided with a second connecting portion, the second connecting portion is parallel to the wire harness segregation board, and the second side wall is fixed to the wire harness segregation board through the second connecting portion.

The protecting component and the wire harness segregation board can be fixed through the arranged first connecting portion and the second connecting portion, so that the protecting component is stable and is processed and installed conveniently.

In some embodiments, the first connecting portion is connected to the wire harness segregation board by way of at least one of the following modes: buckle connection, threaded connection and welding; and/or the second connecting portion is connected to the wire harness segregation board by way of at least one of the following modes: buckle connection, threaded connection and welding. The structure is simple and is processed conveniently.

In some embodiments, the first wall is provided with a first electrode terminal and a second electrode terminal, where the first electrode terminal and the second electrode terminal are located on both sides of the press relief mechanism in a second direction, respectively, the second direction is perpendicular to the first direction and is parallel to the first wall, and the first connecting portion corresponds to an area between the pressure relief mechanism and the first electrode terminal; and/or the second connecting portion corresponds to an area between the pressure relief mechanism and the second electrode terminal.

The first connecting portion and the second connecting portion are arranged between the corresponding electrode terminals and the pressure relief mechanisms, respectively, so that the space can be utilized reasonably, and thus, the exhaust passage formed by the protecting component can cover the pressure relief mechanisms without affecting the installation of the electrode terminals, thereby preventing short circuiting.

In some embodiments, a length of the protecting component in the first direction is greater than or equal to a total length of the plurality of battery cells in the first direction.

Thus, both ends of the protecting component in the first direction can exceed the corresponding outermost battery cell. On the one hand, under the circumstance that the emissions are discharged at both ends of the exhaust passage formed by the protecting component, the emissions will not affect the outermost battery cell, so that thermal diffusion is avoided. On the other hand, both ends of the exhaust passage formed by the protecting component can be collected to the gathering area, respectively, to gather the emissions in a centralized manner.

In some embodiments, a material of the protecting part includes the following at least one of a metal, a mica, a glass fiber and a ceramic.

The protecting component can be a metal, so that the strength of the protecting component is high enough to prevent the protecting component from being destroyed by the emissions discharged by the pressure relief mechanism, and therefore, the exhaust passage is prevented from being destroyed. The protecting component can also be a mica featuring high strength and melting point. Similarly, the strength of the protecting component can be guaranteed, and the mica further has a good heat insulation effect.

In a second aspect, provided is an electricity consumption device, including the battery in the first aspect or in any one embodiment in the first aspect.

In some embodiments, the electricity consumption device is a vehicle, a vessel or an aircraft.

In a third aspect, provided is a method for manufacturing a battery, including: providing a plurality of battery cells arranged in a first direction, where a first wall of each of the battery cells is provided with a pressure relief mechanism configured to actuate to relieve a pressure inside the battery cell when the pressure or a temperature inside the battery cell reaches a threshold; and providing a protecting component, where the protecting component covers the pressure relief mechanisms of the plurality of battery cells outside the plurality of battery cells and forms an exhaust passage with the first walls of the plurality of battery cells, and the exhaust passage is configured to discharge emissions discharged by the pressure relief mechanisms from both ends of the exhaust passage in the first direction when the pressure relief mechanisms actuate.

In a fourth aspect, provided is a device for manufacturing a battery, including a module for executing the method in the above third aspect.

### BRIEF DESCRIPTION OF THE DRAWINGS

FIG. 1 is a structural schematic diagram of a vehicle disclosed by an embodiment of the present application;
FIG. 2 is a schematic diagram of a breakdown structure of a battery disclosed by an embodiment of the present application;
FIG. 3 is a schematic diagram of a partial structure of a protecting component disclosed by an embodiment of the present application;
FIG. 4 is a structural schematic diagram of the protecting component and a fire fighting pipeline disclosed by an embodiment of the present application;
FIG. 5 is a schematic diagram of a partial structure of a battery disclosed by an embodiment of the present application;
FIG. 6 is a schematic diagram of a partial section of a battery disclosed by an embodiment of the present application;
FIG. 7 is a structural schematic diagram of another protecting component and fire fighting pipeline disclosed by an embodiment of the present application;
FIG. 8 is a schematic diagram of a partial structure of another battery disclosed by an embodiment of the present application;
FIG. 9 is a schematic diagram of a partial section of another battery disclosed by an embodiment of the present application;
FIG. 10 is a schematic flow diagram of a method for manufacturing the battery disclosed by an embodiment of the present application; and
FIG. 11 is a schematic block diagram of a method for manufacturing the battery disclosed by an embodiment of the present application.

The drawings are not drawn to scale.

### DESCRIPTION OF THE EMBODIMENTS

The following further describes the implementations of the present application in detail with reference to the accompanying drawings and embodiments. Detailed description of the following embodiments and accompanying drawings are used to illustratively state the principles of the present application, but not to limit the scope of the present application, that is, the present application is not limited to the embodiments described.

In description of the present application, it should be understood that unless otherwise specified, the implication of "a plurality of" means more than two; orientation or position relationships indicated by terms "upper", "lower", "left', "right", "inner", "outer" and the like are only to describe the present application and simplify the description rather than indicating or implying that the indicated devices or components must have specific orientations and are configured and operated in the specific orientations. Therefore, it cannot be construed as limitations to the present application. In addition, the terms "first", "second", "third" and the like are for descriptive purposes only and should not be construed as indicating or implying relative importance. "Perpendicular" is by no means perpendicular in the strict sense but within an allowed range of error. "Parallel" is by no means parallel in the strict sense but within an allowed range of error.

Location words in the description below all are directions shown in drawings and do not limit the specific structure of the present application. In the description of the present application, it is to be further noted that unless otherwise specified and defined, the terms "mounting", "connecting" and "connection" should be understood in a broad sense, for example, "mounting", "connecting" and "connection" can be either fixed connection or detachable connection or integrated connection; can be either direct connection and can be either indirect connection via an intermediation. Those of ordinary skill in the art can understand specific meaning of the terms in the present application under specific circumstances.

In the embodiments of the present application, same drawing labels represent same components. In order for briefness, in different embodiments, detailed description on same components is omitted. It shall be understood that dimensions such as thickness, length and width of various components and dimensions such integral thickness, length and width of the integrating apparatus in the embodiments of the present application in the drawings are exemplary description and do not define the present application.

In the application, the single battery may include a lithium-ion secondary battery, a lithium-ion primary battery, a lithium-sulfur battery, a sodium lithium-ion battery, a sodium-ion battery or a magnesium ion battery and the like, which is not defined in the embodiments of the application. The single battery may be cylindrical, flat, cuboid or in other shapes and the like, which is not defined in the embodiments of the application. The single battery is divided into three types according to encapsulating ways: a cylindrical single battery, a square single battery and a soft roll single battery, which is not defined in the embodiments of the application.

The battery provided in the embodiments of the application refers to a physical module including one or more battery cells to provide a higher voltage and capacity. For example, the battery provided in the application may include a battery module or a battery pack and the like. The battery usually includes a box body for encapsulating one or more battery cells. The box body may prevent a liquid or other foreign matters from affecting charging or discharging of the single battery.

The single battery includes an electrode assembly and an electrolyte, and the electrode assembly is composed of a cathode piece, an anode piece and an isolating membrane. The single battery works primarily dependent on movement of metal ions between the cathode piece and the anode piece. The cathode piece includes a cathode current collector and a cathode active substance layer, the cathode active substance layer is coated to the surface of the cathode current collector, the cathode current collector not coated with the cathode active substance layer protrudes out of the cathode current collector of the cathode active substance layer, and the cathode current collector not coated with the cathode active substance layer is used as the cathode lug. By taking the lithium-ion battery as an example, the cathode current collector is made from aluminum, and the cathode active substance may be lithium cobalt oxide, lithium iron phosphate, ternary lithium or lithium manganate and the like. The anode piece includes an anode current collector and an anode active substance layer, the anode active substance layer is coated to the surface of the anode current collector, the anode current collector not coated with the anode active substance layer protrudes out of the anode current collector of the anode active substance layer, and the anode current collector not coated with the anode active substance layer is used as the anode lug. The anode current collector is made from copper, and the anode active substance may be carbon or silicon and the like. In order to guarantee that a large current passes through without fusion, a plurality of anode lugs are stacked together and a plurality of cathode lugs are stacked together. The isolating membrane may be polypropylene (PP) or polyethylene (PE) and the like. In addition, the electrode assembly may be either of a winding type structure or a stacked structure, which is not defined in the embodiments of the application.

For development of battery technology, design factors in multiple aspects are considered simultaneously, for example, performance parameters such as energy density, cycle life, discharge capacity and charge-discharge rate. In addition, the safety of the battery needs to be further considered.

For the battery cell, the major safety risk is originated from charging and discharging processes, and meanwhile, there is still an appropriate environment temperature design. To effectively avoid unnecessary loss, usually, there will be multiple protective measures for the battery cell. Specifically speaking, the protective measures at least include one or more of switch elements, selection of appropriate isolating membrane materials and the pressure relief mechanisms. The switch element is an element capable of stopping charging the battery or discharge of the battery when the temperature or resistance in the battery cell reaches a certain threshold. The isolating membrane is configured to isolate the positive plate and the negative plate, and micron order (even nanoscale) micropores attached thereto can be dissolved automatically when the temperature rises to a certain numerical value, so that the metal ions cannot pass on the isolating membrane, and thus, the internal reaction of the battery cell is terminated. The pressure relief mechanism is an element or a component which actuates to relieve a pressure in the battery cell when an internal pressure or temperature of the battery cell reaches a predetermined threshold.

The pressure relief mechanism on the battery cell has a significant impact on the safety of the battery. For example, when phenomena such as short circuiting and overcharging occurs, the pressure or temperature may rise suddenly as thermal runawaythermal runaway in the battery cell occurs. Under such circumstance, the pressure relief mechanism actuates to release the internal pressure and temperature outwards to prevent explosion and fire of the battery cell.

Design of the pressure relief mechanism mainly concerns a release of high pressure and high heat in the battery cell, i.e., the emissions are discharged out of the battery cell. The high-temperature and high-pressure emissions are discharged towards the direction where the pressure relief mechanism is arranged on the battery cell, and moreover, the emissions can be more specifically discharged towards the direction of the area where the pressure relief mechanism actuates. The emissions feature high power and destructive power. Particularly when the emissions are discharged out of the battery cell through the pressure relief mechanism, the flying direction of the emissions cannot be determined, so one or more structures out of the battery cell may be destroyed. For example, the emissions may include some conductive residues. If the conductive residues are in lap joint to a certain high tension loop after being discharged by the pressure relief mechanism, secondary ignition may be caused to induce battery explosion, which results in further safety problems.

Therefore, the embodiments of the present application provide a battery. The battery includes a plurality of battery cells arranged in a first direction, where a first wall of each of the battery cells is provided with a pressure relief mechanism to actuate to relieve a pressure inside the battery cell when the pressure or a temperature inside the battery cell reaches a threshold; and the battery further includes a protecting component, where the protecting component covers the pressure relief mechanisms of the plurality of battery cells outside the plurality of battery cells and forms an exhaust passage with the first walls of the plurality of battery cells, i.e., the exhaust passage extends in a first direction. Thus, when the pressure relief mechanism actuates, the emissions discharged by the pressure relief mechanism can be discharged from both ends of the exhaust passage in the first direction, so that a purpose of discharging the emissions directionally is achieved. The emissions can be discharged timely, and the emissions can also be prevented from flying apart randomly towards other directions to damage other components in the battery. For example, the emissions can be prevented from being in lap joint to a high tension loop in the battery, so the risk of secondary ignition is reduced, and therefore, safety problems such as battery explosion can be effectively avoided.

The technical solution described in the embodiments of the present application is suitable for various electricity consumption devices using the battery. The electricity consumption device may be a vehicle, a mobile phone, a portable device, a notebook computer, a steamer, a spacecraft, an electric toy, an electric tool and the like. The vehicle may be a fuel automobile, a gas automobile or a new energy automobile. The new energy automobile may be a pure electric automobile, a hybrid automobile or an extended-range automobile and the like. The spacecraft may be an airplane, a rocket, a space shuttle, a spacecraft and the like. The electric toy includes a fixed electric toy or a movable electric toy, for example, a game machine, an electric automobile toy, an electric steamer toy, an electric airplane toy and the like. The electric tool includes a metal cutting electric tool, a grinding electric tool, an assembling electric tool and a railway electric tool, for example, an electric drill, an electric grinder, an electric wrench, an electric screw driver, an electric hammer, an electric impact drill, a concrete vibrator, an electric planer and the like. The above electric devices are not defined specifically in the embodiments of the present application.

In order to facilitate description, the embodiments are described by taking the electricity consumption device which is the vehicle as an example.

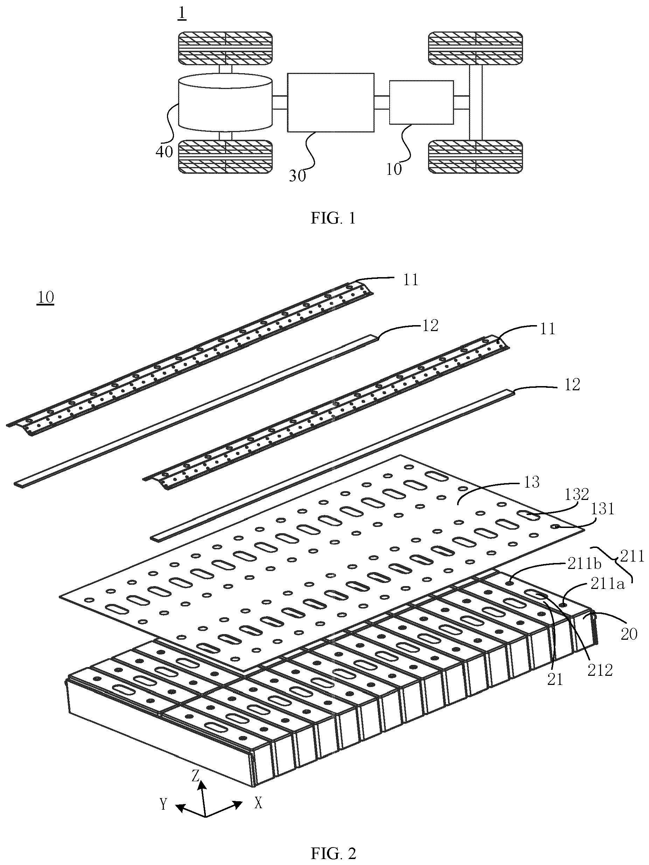

For example, FIG. 1 is a structural schematic diagram of a vehicle 1 in an embodiment of the present application. The vehicle 1 may be an oil-fueled automobile, a gas automobile or a new energy automobile. The new energy automobile may be either a full electric vehicle, a hybrid electric vehicle or an extended range electric vehicle and the like. A motor 40, a controller 30 and a battery 10 can be arranged in the vehicle 1, where the controller 30 is configured to control the battery 10 to supply power to the motor 40. For example, the battery 10 can be arranged at the bottom or head or tail of the vehicle 1. The battery 10 can be used for supplying power to the vehicle 1, for example, the battery 10 can serve as an operating power supply for the vehicle 1 for a circuit system of the vehicle 1, for example, for a working electric demand during start, navigation and running of the vehicle 1. In another embodiment of the application, the battery 10 can not only serve as the operating power supply of the vehicle 1, but also can serve as a driving power supply of the vehicle 1 to replace or partially replace fuel or natural gas to provide driving power to the vehicle 1.

To satisfy the different electric power using demands, the battery may include a plurality of battery cells, where the plurality of battery cells may be connected in series or connected in parallel or may be in series-parallel connection. A series-parallel connection refers to mixing serial connection and parallel connection. The battery is also referred as to a battery pack. In some embodiments, the plurality of battery cells may be connected in series or in parallel or may be in series-parallel connection to form a battery module, and a plurality of battery modules are then connected in series or in parallel or may be in series-parallel connection to form a battery. That is to say, the plurality of battery cells may directly form the battery or may form the battery modules first and then the battery modules form the battery.

For example, FIG. 2 illustrates a schematic diagram of a breakdown structure of a battery 10 disclosed by an embodiment of the present application. As shown in FIG. 2, the battery 10 includes a plurality of battery cells 20 arranged in a first direction X, where a first wall 21 of each of the battery cells 20 is provided with a pressure relief mechanism 212 configured to actuate to relieve a pressure inside the battery cell 20 when the pressure or a temperature inside the battery cell 20 reaches a threshold; and a protecting component 11, where the protecting component 11 covers the pressure relief mechanisms 212 of the plurality of battery cells 20 outside the plurality of battery cells 20 and forms an exhaust passage with the first walls 21 of the plurality of battery cells 20, and the exhaust passage is configured to discharge emissions discharged by the pressure relief mechanisms 212 from both ends of the exhaust passage in the first direction X when the pressure relief mechanisms 212 actuate.

It should be understood that the battery 10 in the embodiment of the present application may include an accommodation space configured to accommodate the plurality of battery cells 20. The plurality of battery cells 20 included in the battery 10 may be arranged in an array to improve the spatial utilization ratio of the accommodation space of the battery 10. Specifically, the battery 10 may include at least one column of battery cells 20 arranged in a second direction Y, and each column of battery cells 20 includes a plurality of battery cells 20 arranged in the first direction X, the second direction Y being perpendicular to the first direction X. For example, in FIG. 2, the battery 10 including two columns of battery cells 20 arranged in the second direction Y is taken as an example, and each column of battery cells 20 includes a plurality of battery cells 20 arranged in the first direction X. The two columns of battery cells 20 including equal quantity of battery cells 20 are taken as an example herein, but the embodiment of the present application is not limited thereto.

The shapes of the battery cells 20 in the embodiment of the present application may be flexibly arranged according to an actual application, and the shapes of the plurality of battery cells 20 included in the battery 10 may be same or different. For example, the shapes of the plurality of battery cells 20 included in the battery 10 may be same, so that the battery is conveniently processed and assembled. For further example, the battery cell 20 may be either a cuboid or a cylinder or other polyhedrons. For the convenience of description, in the present application, the battery 10 including the plurality of battery cells same in shape and size and each battery cell 20 being the cuboid are taken as an example, but the embodiment of the present application is not limited thereto.

In the embodiment of the present application, the cuboid battery cell 20 includes six walls, where the first wall 21 may be any one wall. The first wall 21 is provided with the pressure relief mechanism 212. To enable the pressure relief mechanism 212 to actuate when the internal pressure or temperature of the batter cell 20 reaches the threshold, so as to relieve the internal pressure and reduce the internal temperature, the first wall 21 is usually not the wall where the two battery cells 20 attach to each other. For example, as shown in FIG. 2, the two adjacent battery cells 20 may be attached to each other through the wall with the largest area, so the first wall 21 provided with the pressure relief mechanism 211 shall not be the wall with the largest area. On the contrary, if the two adjacent battery cells 20 are attached to each other through other walls, the first wall 21 provided with the pressure relief mechanism 212 may also be arranged as the wall with the largest area.

For the convenience of description, the condition that the two adjacent battery cells 20 arranged in the first direction X are attached to each other through the wall with the largest area and the two adjacent battery cells 20 arranged in the second direction Y are attached to each other through the wall with the smallest area are taken as an example here, so the first wall 21 provided with the pressure relief mechanism 212 is neither the wall with the largest area nor the wall with the smallest area. The first wall 21 of the battery cell 20 is not attached to the wall of the adjacent battery cell 20, so that it is guaranteed that the press relief mechanism 212 arranged on the first wall 21 can relieve the internal pressure of the battery cell 20 subjected to thermal runawaythermal runaway timely.

It should be understood that the pressure relief mechanism 212 in the embodiment of the present application is arranged to actuate when the internal temperature or pressure of the battery cell 20 reaches the threshold, and the threshold can be set as different values according to different demands in actual application. For example, the threshold may be dependent on the material of one or more of the positive plate, the negative plate, the electrolyte and the isolating membrane in the battery cell 20. In addition, the pressure relief mechanism 212 may be in form of an anti-explosion valve, a gas valve, a pressure relief valve or a safety valve, and may be specifically a pressure-sensitive or temperature-sensitive element or structure, i.e., when the internal pressure or temperature of the battery cell 20 reaches the predetermined threshold, the pressure relief mechanism 212 executes an action or the weak structure arranged in the pressure relief mechanism 212 is destroyed to form an opening or channel where the internal pressure or temperature is relieved.

The "actuation" mentioned in the present application means that the pressure relief mechanism 212 generates the action or is activated to a certain state, so that the internal pressure or temperature in the battery cell 20 is relieved. The action generated by the pressure relief mechanism 212 may include, but are not limited to, rupturing, crushing, tearing or opening of at least one part in the pressure relief mechanism 212. When the pressure relief mechanism 212 actuates, the high-temperature and high-pressure substances in the battery cell 20 are discharged outwards from the actuated part as the emissions. In this way, pressure of the battery cell 20 may be relieved under the circumstance of controllable pressure or temperature, so that more severe potential accidents are avoided.

The emissions from the battery cell 20 mentioned in the present application include, but are not limited to, the electrolyte, the positive and negative plates dissolved or split, fragments of the isolating membrane, the high-temperature and high-pressure gases and flames generated by the reaction and the like.

The protecting component 11 in the embodiment of the present application covers the pressure relief mechanisms 212 of the plurality of battery cells arranged in the first direction X and is capable of forming the exhaust passage with the first wall 21. In some embodiments, in consideration of other components which may also exist between the side, away from the inner side of the battery cell 20, of the first wall 21 and the protecting component 11, formation of the exhaust passage between the protecting component 11 and the first wall 21 in the embodiment of the present application may include the following one or more circumstances: the protecting component 11 is in direct contact with the first wall 21, and the first protecting component 11 and the first wall 21 jointly form the exhaust passage; the protecting component 11 is not in contact with the first wall 21 and may be in contact with other components arranged on the surface, away from the inner side of the battery cell 20, of the first wall 21, and the exhaust passage is formed between the protecting component 11 and the other components; a part of areas of the protecting component 11 is in contact with a part of areas of the first wall 21, and a part of areas of the protecting component 11 is in contact with the other components arranged on the surface, away from the inner side of the battery cell 20, of the first wall 21, so the exhaust passage may be jointly formed among the protecting component 11, the first wall 21 and the other components arranged on the surface, away from the inner side of the battery cell 20, of the first wall 21, but the embodiment of the present application is not limited thereto.

The protecting component 11 in the embodiment of the present application covers the plurality of battery cells 20 arranged in the first direction X. Thus, the protecting component 11 extends in the first direction X, so that the exhaust passage formed by the protecting component 11 extends in the first direction X. Thus, when the pressure relief mechanism 212 actuates, the emissions discharged by the pressure relief mechanism 212 can be discharged from both ends of the exhaust passage in the first direction, so that a purpose of discharging the emissions directionally is achieved. The emissions can be discharged timely, and the emissions can also be prevented from flying apart randomly towards other directions to damage other components in the battery 10. For example, the emissions can be prevented from being in lap joint to a high tension loop in the battery 10, so the risk of secondary ignition is reduced, and therefore, safety problems such as battery 10 explosion can be effectively avoided.

In some embodiments, the battery 10 in the embodiment of the present application may also include a box body which is provided with an accommodation space configured to accommodate the plurality of battery cells 20. Specifically, the interior of the box body may be a hollow structure, the plurality of battery cells 20 are accommodated in the box body, and moreover, the shape of the box body may be decided according to the accommodated plurality of battery cells 20. For example, by taking the plurality of battery cells 20 shown in FIG. 2 as an example, the box body may be correspondingly arranged as a cuboid with six walls. Specifically, the box body may include two portions which are called as a first portion and a second portion herein, the first portion and the second portion being buckled together. The shape of the first and second portions may be decided according to the combined shape of the battery cells 20, and at least one of the first and second portions is provided with an opening. For example, both the first and second portions may be hollow cuboids with only one opened surface, the openings of the first and second portions are formed oppositely, and the first and second portions are buckled with each other to form the box body with a closed chamber. For further example, only one of the first and second portions may be the hollow cuboid with the opening, and the other one is plate-like to cover the opening, so as to form the box body with the closed chamber. The chamber may be configured to accommodate the plurality of battery cells 20. The plurality of battery cells 20 are connected in series or in parallel or are in series-parallel connection and are placed in the box body formed by buckling the first and second portions.

In some embodiments, the battery 10 further includes a wire harness segregation board 13, arranged on a surface, facing an exterior of the battery cell 20, of the first wall 21. Specifically, the wire harness segregation board 13 may be made from an insulation material to isolate the first wall 21 of the battery cell 20 and the other components. For example, the wire harness segregation board 13 may be configured to wrap a converging component, and the converging component is configured to realize an electric connection among the plurality of battery cells 20, for example, parallel connection or serial connection or series-parallel connection. Specifically, the converging component may realize the electric connection with the battery cell 20 by being connected to the electrode terminal 211 of the battery cell 20. Further, the converging component may be fixed to the electrode terminal 211 of the battery cell 20 by welding.

It should be understood that each of the battery cells 20 in the embodiment of the present application may include two electrode terminals 211a and 211b to output electric energy. For example, the two electrode terminals 211a and 211b may be positive electrode terminals and negative electrode terminals, respectively, and the two electrode terminals 211a and 211b may be arranged on any one wall or a plurality of walls of the battery cell 20. For example, the two electrode terminals 211a and 211b may be arranged on a same wall or on two walls, respectively; and moreover, for any one electrode terminal 211, it may be arranged on the same wall with the pressure relief mechanism 211 or it may be arranged on a different wall. As shown in FIG. 2, the description is performed in the embodiment of the present application by taking the two electrode terminals 211a and 211b arranged on the first wall 21 as an example, i.e., the first wall 21 is provided with the first electrode terminal 211a and the second electrode terminal 211b. The first electrode terminal 211a and the second electrode terminal 211b are located on both sides of the pressure relief mechanism 212 in the second direction Y, respectively, the second direction Y being perpendicular to the first direction X and being parallel to the first wall 21.

In some embodiments, the wire harness segregation board 13 may further be configured to wrap other structures arranged on the surface of the first wall 21. For example, the wire harness segregation board 13 may further be configured to wrap a flexible printed circuit (FPC) which may be configured to monitor the state of each battery cell 20, for example, the temperature state or the voltage state and the like, but the embodiment of the present application is not limited thereto.

In consideration of the plurality of battery cells 20 arranged in the battery 10, there may be a large number of components such as converging components or FPCs connecting the battery cells 20, with a large area arranged, so that the components can be integrated through the wire harness segregation board 13, and thus, the plurality of battery cells 20 are assembled more conveniently. For example, the two columns of battery cells 20 arranged in the second direction Y shown in FIG. 2 may be correspondingly arranged as one wire harness segregation board 13. In addition, the wire harness segregation board 13 may also isolate the components such as the converging part or the FPC and other components to avoid short circuiting.

In some embodiments, as shown in FIG. 2, the wire harness segregation board 13 may include a first avoidance area 131, configured to avoid the electrode terminal 211 of the battery cell 20, so that the electrode terminal 211 is electrically connected to the converging component. Specifically, the shape of the first avoidance area 131 may be arranged according to the shape of the electrode terminal 211. For example, as shown in FIG. 2, by taking the electrode terminal 211 which is a cylinder as an example, the first avoidance area 131 may have a round arrangement, but the embodiment of the present application is not limited thereto.

In some embodiments, as shown in FIG. 2, the wire harness segregation board 13 may also include a second avoidance area 132, configured to avoid the pressure relief mechanism 212, so that the pressure relief mechanism 212 discharges the emissions timely to relieve the internal pressure of the battery cell 20 during thermal runaway of the battery cell 20. Specifically, the shape of the second avoidance area 132 may be arranged according to the shape of the pressure relief mechanism 212. For example, the shape of the second avoidance area may be kept consistent with that of the pressure relief mechanism 212m and the area of the second avoidance area 132 is larger than that of the pressure relief mechanism 212 to prevent the pressure relief mechanism 212 from being shielded to further affect the pressure relief mechanism 212 to discharge the emissions timely.

It should be understood that the first avoidance area 131 and/or the second avoidance area 132 may be implemented in various modes. For example, the first avoidance area 131 may be an area exposed to the partial converging component, so that the corresponding electrode terminal 211 is electrically connected to the converging component in the first avoidance area 131. For example, the two may be electrically connected by welding. Moreover, by welding the converging component to the electrode terminal 211, the wire harness segregation board 13 is relatively fixed to the first wall 21 of the battery cell 20. For further example, the second avoidance area 132 may be a through hole, so that the emissions discharged by the pressure relief mechanism 212 can be discharged smoothly through the wire harness segregation board 13, but the embodiment of the present application is not limited thereto.

In some embodiments, other components may be also arranged on the surface, away from the inner side of the battery cell 20, of the first wall 21 of the battery cell 20, which is not repeatedly described herein. For example, between the first wall 21 and the wire harness segregation board 13, an insulating component may also be arranged on the surface of the first wall 21 of each of the battery cells 20, i.e., the insulating components are in a one-to-one correspondence to the battery cells 20. The insulating components may be configured to isolate the first wall 21 and the wire harness segregation board 13 to protect the first wall 21, but the embodiment of the present application is not limited thereto.

As shown in FIG. 2, in view of the wire harness segregation board 13 which may be arranged on the surface, away from the battery cell 20, of the first wall 21 in the embodiment of the present application, the present application is mainly described by taking formation of the exhaust passage by the protecting component 11 and the wire harness segregation board 13 as an example, i.e., the protecting component 11 and the first wall 21 form the exhaust passage indirectly.

Specifically, the protecting component 11 in the embodiment of the present application covers the pressure relief mechanisms 212 of the plurality of battery cells 20 outside the plurality of battery cells 20 and forms the exhaust passage with the wire harness segregation board 13 formed on the surface of the first wall 21. In some embodiments, a material of the protecting component 11 includes the following at least one of a metal, a mica, a glass fiber and a ceramic. For example, the protecting component 11 can be a metal, so that the strength of the protecting component 11 is high enough to prevent the protecting component 11 from being destroyed by the emissions discharged by the pressure relief mechanism 212, and therefore, the exhaust passage is prevented from being destroyed. For further example, the protecting component 11 can also be a mica featuring high strength and melting point. Similarly, the strength of the protecting component 11 can be guaranteed, and the mica further has a good heat insulation effect.

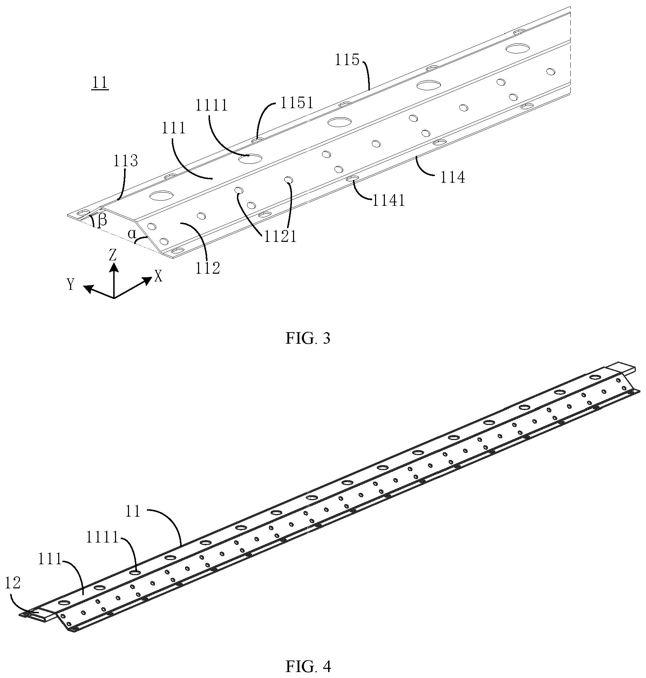

FIG. 3 illustrates a schematic diagram of a partial structure of a protecting component 11 in the embodiment of the present application. As shown in FIG. 2 and FIG. 3, the protecting component 11 includes a top wall 111, a first side wall 112 and a second side wall 113, where the top wall 111 is arranged opposite to the pressure relief mechanisms 212 of the plurality of battery cells 20; the top wall 111 is configured to connect the first side wall 112 and the second side wall 113; and the first side wall 112 and the second side wall 113 are connected to the wire harness segregation board 13, respectively. Specifically, the top wall 111, the first side wall 112 and the second side wall 113 of the protecting component 11 and the surface, facing the protecting component 11, of the wire harness segregation board 13 can jointly form a wall of the exhaust passage, and the exhaust passage formed by the plurality of walls is convenient to process and more stable.

In some embodiments, the shape and size of the section of the surface in the axial direction perpendicular to the exhaust passage of the exhaust passage in the embodiment of the present application can be arranged according to actual application. For example, as shown in FIG. 3, a value range of an included angle between the first side wall 112 and the wire harness segregation board 13 is [30°, 90°]; and/or a value range of an included angle between the second side wall 113 and the wire harness segregation board 13 is [30°, 90°]. Specifically, the included angle α between the first side wall 112 and the wire harness segregation board 13 and/or the included angle β between the second side wall 113 and the wire harness segregation board 13 shall not be too large, and if the included angles are too large, the size of the protecting component in the height direction of the battery 10 will be increased and the total size of the battery 10 in the height direction Z will be increased, so the energy density of the battery 10 will be reduced; but, the included angle α and/or the included angle shall β not be too small, if the included angles are too small, the exhaust passage formed by the protecting component 11 is too small, which is harmful to discharge the emissions timely and may cause diffusion of thermal runawaythermal runaway, further resulting in battery 10 explosion.

For further example, the included angle α between the first side wall 112 and the wire harness segregation board 13 can be equal to the included angle β between the second side wall 113 and the wire harness segregation board 13, and moreover, it can be guaranteed that the top wall 111 and the wire harness segregation board 13 are parallel, so that other components are installed conveniently.

In some embodiments, as shown in FIG. 2 and FIG. 3, an end, close to the wire harness segregation board 13, of the first side wall 112 is provided with a first connecting portion 114, the first connecting portion 114 is parallel to the wire harness segregation board 13, and the first side wall 112 is fixed to the wire harness segregation board 13 through the first connecting portion 114; and/or an end, close to the wire harness segregation board 13, of the second side wall 113 is provided with a second connecting portion 115, the second connecting portion 115 is parallel to the wire harness segregation board 13, and the second side wall 113 is fixed to the wire harness segregation board 13 through the second connecting portion 115. The protecting component 11 and the wire harness segregation board 13 can be fixed through the arranged first connecting portion 114 and the second connecting portion 115, so that the protecting component 11 is stable and is processed and installed conveniently.

In some embodiments, the first connecting portion 114 is connected to the wire harness segregation board 13 by way of at least one of the following modes: buckle connection, threaded connection and welding; and/or the second connecting portion 115 is connected to the wire harness segregation board 13 by way of at least one of the following modes: buckle connection, threaded connection and welding. For example, as shown in FIG. 2 and FIG. 3, the first connecting portion 114 can be provided with a plurality of first connecting areas 1141, and the first connecting areas can be third through holes. The third through holes can be configured to realize the threaded connection between the first connecting portion 114 and the wire harness segregation board 13, or the first connecting areas 1141 can be configured to arrange a limiting structure to realize the buckled connection with the wire harness segregation board 13 or the first connecting areas 1141 are welding areas to realize welding with the wire harness segregation board 13. Similarly, the second connecting portion 115 can be provided with a plurality of second connecting areas 1151, and the second connecting areas 1151 can be fourth through holes. The fourth through holes can be configured to realize the threaded connection between the second connecting portion 115 and the wire harness segregation board 13, or the second connecting areas 1151 can be configured to arrange a limiting structure to realize the buckled connection with the wire harness segregation board 13 or the second connecting areas 1151 are welding areas to realize welding with the wire harness segregation board 13. The above various modes not only facilitate processing, but also guarantees the stability of the protecting component 11.

In some embodiments, as shown in FIG. 3, the first side wall 112 and/or the second side wall 113 are provided with a plurality of first through holes 1121 and 1131, and the first through holes 1121 and 1131 are configured to relieve the internal pressure of the battery cell 20 when the pressure relief mechanism 212 actuates. Specifically, the first side wall 112 can be provided with one or more first through holes 1121, and the second side wall 113 can be provided with one or more first through holes 1131. In consideration of instantaneous discharge of the emissions by the battery cell 20 subjected to thermal runawaythermal runaway, the emissions may include a lot of high-temperature gases. The emissions are only discharged from both ends of the protecting component 11, which may cause the problem of late discharge. Therefore, a plurality of first through holes 1121 and 1131 can be formed to discharge a part of gases. On the one hand, the internal pressure of the battery cell 20 subjected to thermal runawaythermal runaway is reduced timely, so that explosion due to overpressure is avoided. On the other hand, since the first through holes 1121 and 1131 feature small size, large fragmental emissions will not be discharged, so that other components will not be affected greatly.

It should be understood that the shapes and sizes of the first through holes 1121 and 1131 can be flexibly arranged according to actual application. For example, the first through holes 1121 and 1131 can be round to facilitate processing. For further example, the pore diameter of the first through holes 1121 and 1131 is less than or equal to 10 mm. A condition that when the pore diameter is great, oversized fragments in the emissions discharged by the pressure relief mechanism 212 are discharged through the first through holes 1121 and 1131 and may be in lap joint to the high tension loop in the battery 10 to cause short circuiting of the battery and trigger secondary ignition, resulting in battery 10 explosion is avoided. Specifically, the pore diameter of the first through holes 1121 and 1131 can be set to be equal to 5 mm, but the embodiment of the present application is not limited thereto.

It should be understood that the quantity of the first through holes 1121 and 1131 can be arranged according to actual application and shall not be too great to prevent the strength of the protecting component 11 from being reduced, so that a condition that the emissions cannot be directionally discharged from both sides of the protecting component 11 in the first direction X as the discharged emission destroys the protecting component 11 when the pressure relief mechanism 212 actuates is avoided.

In some embodiments, the battery 10 further includes a fire fighting pipeline 12, configured to accommodate a fire fighting medium and to discharge the fire fighting medium when the pressure relief mechanisms 212 actuate. In consideration of possible large power and destructive power of the emissions discharged by the pressure relief mechanism 212 and high temperature, the fire fighting pipeline 12 can be arranged in a corresponding position of the pressure relief mechanism 212 of the battery cell 20. The emissions discharged from the battery cell 20 destroy the fire fighting pipeline 12 when the pressure relief mechanism 212 actuates, so that the fire fighting medium in the fire fighting pipeline 12 is discharged from the destroyed placed of the fire fighting pipeline 12. The emissions discharged by the pressure relief mechanism 212 are cooled, so that the emissions are less dangerous, and thermal runaway of other battery cells 20 due to thermal diffusion due to the temperature of the emissions being too high is avoided, so that the safety of the battery 10 can be enhanced.

It should be understood that the fire fighting pipeline 12 is arranged corresponding to the pressure relief mechanisms 212 of the plurality of battery cells 20 and extends in the first direction X. To make the fire fighting pipeline 12 be destroyed when the pressure relief mechanism 212 actuates to cool the emissions discharged by the pressure relief mechanism 212, the position of the fire fighting pipeline 12 shall correspond to the position of the pressure relief mechanism 212. For example, as shown in FIG. 2, the fire fighting pipeline 12 can extend in the first direction X to cope with all the plurality of pressure relief mechanisms 212 arranged in the first direction X. There are many fire fighting media stored in the fire fighting pipeline 12, and it can further be guaranteed that there are areas corresponding to the fire fighting pipeline 12 and the areas are destroyed when any one battery cell 20 is subjected to thermal runaway, thus, the discharged fire fighting medium cools the emissions of the battery cell 20 timely. Furthermore, when the battery 10 includes a plurality of columns of battery cells 20 arranged in the second direction Y, it can be correspondingly provided with a plurality of fire fighting pipelines 12, and each of the fire fighting pipelines 12 corresponds to a column of battery cells 20, but the embodiment of the present application is not limited thereto.

The fire fighting pipeline 12 in the embodiment of the present application is configured to accommodate the fire fighting medium. The fire fighting medium herein can be a fluid which can be a liquid or a gas. The fire fighting pipeline 12 can discharge the fire fighting medium when the pressure relief mechanism 211 actuates. For example, the fire fighting pipeline 12 can be arranged corresponding to the pressure relief mechanism 211, so that when the pressure relief mechanism 211 actuates, it can destroy the fire fighting pipeline 12, the internal fire fighting medium flows out to cool the emissions discharged by the pressure relief mechanism 211 so as to prevent thermal diffusion of the battery cell 20 subjected to thermal runaway, and thus, the safety of the battery 10 is improved.

In addition, under the circumstance that the pressure relief mechanism 212 does not destroy the fire fighting pipeline 12, the fire fighting pipeline 12 may not contain any substance. Under the circumstance that the pressure relief mechanism 212 actuates, the fire fighting pipeline 12 contains the fire fighting medium. For example, the fire fighting medium can be controlled by a switch valve to enter the fire fighting pipeline 12. Or, under the circumstance that the pressure relief mechanism 211 is not destroyed, the fire fighting pipeline 12 may accommodate the fire fighting medium all the time. The fire fighting medium may further be configured to adjust the temperature of the battery cell 20. Temperature adjustment refers to heating or cooling the plurality of battery cells 20. Under the circumstance that the battery cell 20 is cooled, the fire fighting pipeline 12 is configured to accommodate a cooling fluid to reduce the temperature of the plurality of battery cells 20. In this case, the fire fighting pipeline 12 may also be called as a cooling component, a cooling system, or a cooling pipeline. The fire fighting medium accommodated by the fire fighting pipeline may also be called as a cooling medium or a cooling fluid. More specifically, it may also be called as a cooling liquid or a cooling gas. Optionally, the fire fighting medium may flow circularly to achieve a better temperature adjustment effect. Optionally, the fire fighting medium may be water, a mixed liquid of water and ethylene glycol or air.

In some embodiments, the protecting component 11 is further configured to limit a position of the fire fighting pipeline 12. To make the fire fighting pipeline 12 be destroyed when the pressure relief mechanism 212 actuates to cool the emissions discharged by the pressure relief mechanism 212, the position of the fire fighting pipeline 12 shall correspond to the position of the pressure relief mechanism 212. However, in an actual using process of the battery 10, the battery may vibrate, which further causes change of position of the fire fighting pipeline 12. Therefore, the position of the fire fighting pipeline 12 may be limited through the protecting component 11. On the one hand, displacement of the fire fighting pipeline 12 may be avoided, and the fire fighting pipeline 12 is prevented from being separated from an original installation position, so that when the pressure relief mechanism 212 actuates, the fire fighting pipeline 12 can be smoothly and accurately destroyed, the emissions discharged by the pressure relief mechanism 212 are cooled timely, and thus, the safety performance of the battery is improved. On the other hand, there is no need to additionally arrange a component configured to fix the fire fighting pipeline 12, so that the processing and installation processes are simplified. In addition, in consideration of the weak rigidity of the fire fighting pipeline 12, when the pressure relief mechanism 212 actuates, the discharged emissions rush into the fire fighting pipeline 12, which may cause large area deformation of the fire fighting pipeline 12. The flow-out position of the fire fighting mechanism inside is uncertain, and the protecting component 11 limits the position of the fire fighting pipeline 12. The destroyed position and direction of the fire fighting pipeline 12 can also be limited, and it is guaranteed that the fire fighting medium inside can flow to the area of the pressure relief mechanism 212, so that the cooling effect of the fire fighting medium discharged by the fire fighting pipeline 12 is improved.

Different positional relations between the protecting component 11 and the fire fighting pipeline 12 will be described in detail below in combination with drawings.

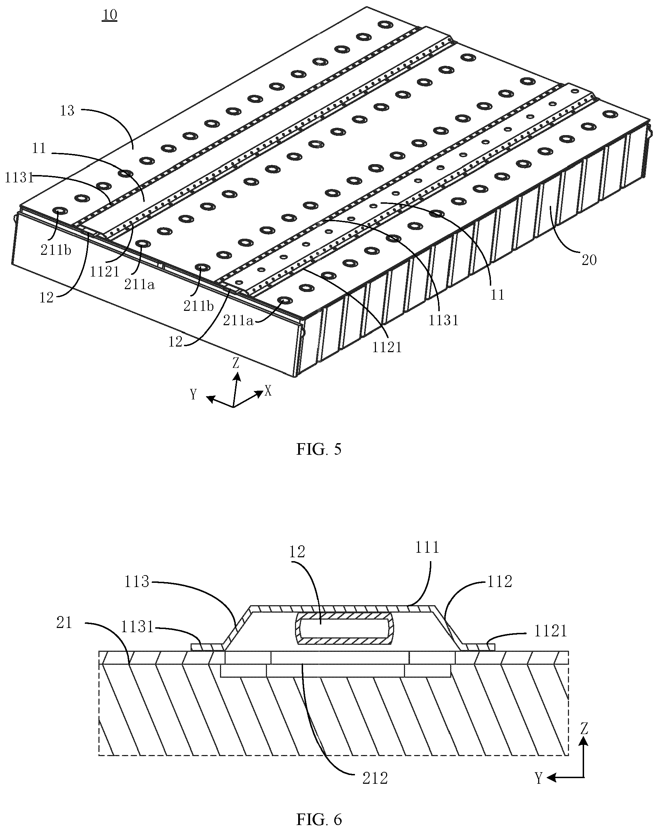

In some embodiments, the fire fighting pipeline 12 is arranged on a side, close to the battery cells 20, of the top wall 111. FIG. 4 illustrates a schematic diagram when the fire fighting pipeline 12 is arranged on the inner side of the top wall 111. FIG. 5 illustrates a schematic diagram of a partial structure of the battery 10 when the fire fighting pipeline 12 is arranged inside the protecting component 11. FIG. 6 illustrates a schematic diagram of a partial section of the battery 10, the section being a section of a plane perpendicular to the first direction X. As shown in FIGs. 4-6, the fire fighting pipeline 12 may be arranged inside the protecting component 11. Specifically, the fire fighting pipeline 12 may be fixed relative to the top wall 111 of the protecting component 11. For example, the fire fighting pipeline 12 may be fixed to the surface of a side, facing the battery cell 10, of the top wall 111 through an adhesive. On the one hand, the fire fighting pipeline 12 is not independently fixed by using an extra fixing structure. Particularly under the circumstance that the wall of the fire fighting pipeline 12 is smooth, the difficulty of fixing the fire fighting pipeline 12 by arranging the buckle and the like is great, and the fire fighting pipeline 12 fixed by the protecting component 11 is processed and assembled more conveniently. On the other hand, the fire fighting pipeline 12 is fixed relative to the top wall 111 and is more stable, so that the integral rigidity of the fire fighting pipeline 12 can be improved through the protecting component 11, and thus, the fire fighting pipeline 12 is prevented from deviating. Particularly when the pressure relief mechanism 212 actuates, the emissions are located in the exhaust passage formed by the protecting component 11, so that the discharged emissions can rapidly and accurately destroy the fire fighting pipeline 12 to accelerate the destroying speed to cool the battery timely. The emissions are further prevented from breaking the fire fighting pipeline 12, so that the reliability of thermal runaway management and control is enhanced.

It should be understood that under the circumstance that the fire fighting pipeline 12 in the embodiment of the present application is arranged inside the protecting component 11, it may not be fixed relative to the protecting component 11. Specifically, a fixing part may be arranged on the wire harness segregation board 13 to fix the fire fighting pipeline 12. The protecting component 11 is fixed relative to the wire harness segregation board 13 through the first connecting portion 114 and the second connecting portion 115, and thus, the fire fighting pipeline 12 and the protecting component 11 may be fixed separately. Or, the fire fighting pipeline 12 may be fixed through the fixing part arranged on the wire harness segregation board 13 and the fire fighting pipeline 12 is fixed to the protecting component 11 through the adhesive, so that the stability of the fire fighting pipeline 12 is improved.

In some embodiments, as shown in FIGs. 4-6, the top wall 111 is provided with a plurality of pressure relief areas 1111, configured to discharge the emissions from the battery cell 20 through the pressure relief areas 1111 when the pressure relief mechanism 212 actuates. Specifically, similar to the first through holes 1121 and 1131 in function, on the one hand, the pressure relief areas 1111 can discharge a part of high-temperature gases timely and reduce the internal pressure of the battery cell 20 subjected to thermal runaway timely, so that explosion due to overpressure is avoided. On the other hand, since the pressure relief areas 1111 feature small size, large fragmental emissions will not be discharged, so that other components will not be affected greatly.

In some embodiments, the pressure relief areas 1111 are weak areas on the top wall 111 and are configured to be destroyed by the emissions from the battery cell 20 when the pressure relief mechanism 212 actuates. For example, the weak area can be achieved by a temperature-sensitive material or by arranging a notch or a groove, so that the pressure relief area 1111 is relatively sealed when the corresponding pressure relief mechanism 212 is not destroyed, so that the strength of the protecting component 11 is kept.

Or the pressure relief areas 1111 are second through holes in the top wall 111, and similar to the first through holes 1121 and 1131, the second through holes may discharge the emissions timely.

The shapes and sizes of the pressure relief areas 1111 can be flexibly arranged according to actual application. For example, the pressure relief areas 1111 may be round to facilitate processing. For further example, the pore diameter of the pressure relief areas 1111 is less than or equal to 10 mm. A condition that when the pore diameter is great, oversized fragments in the emissions discharged by the pressure relief mechanism 212 are discharged through the pressure relief areas 1111 and may be in lap joint to the high tension loop in the battery 10 to cause short circuiting of the battery and trigger secondary ignition, resulting in battery 10 explosion is avoided. Specifically, the pore diameter of the pressure relief areas 1111 may be set to be equal to 5 mm, but the embodiment of the present application is not limited thereto.

It should be understood that the quantity of the pressure relief areas 1111 can be arranged according to actual application and shall not be too great to prevent the strength of the protecting component 11 from being reduced, so that a condition that the emissions cannot be directionally discharged from both sides of the protecting component 11 in the first direction X as the discharged emission destroys the protecting component 11 when the pressure relief mechanism 212 actuates is avoided. For example, the plurality of pressure relief areas 1111 arranged on the top wall 111 may be in a one-to-one correspondence to the pressure relief mechanisms 212 of the plurality of battery cells 20, so that the pressure relief areas 1111 can discharge a part of the emissions timely.

It should be understood that under the circumstance that the fire fighting pipeline 12 is arranged inside the protecting component 11, to ensure that the emissions discharged by the pressure relief mechanism 212 is more centralized to rapidly destroy the fire fighting pipeline 12, the top wall 111 may also be not provided with the pressure relief areas 1111. For example, as shown in the protecting component 11 on the left side in FIG. 5, the top wall 111 may also be not provided with the pressure relief areas 1111; moreover, the plurality of protecting components 11 included in the battery 10 in the embodiment of the present application may not be provided with the pressure relief areas 1111 or may be provided with the pressure relief areas 1111 or may be partially provided with the pressure relief areas 1111 and may not be partially provided with the pressure relief areas 1111, but the embodiment of the present application is not limited thereto.

In some embodiments, a length of the protecting component 11 in the first direction X is greater than or equal to a total length of the plurality of battery cells 20 in the first direction X. Thus, both ends of the protecting component 11 in the first direction X can exceed the corresponding outermost battery cell 20. On the one hand, under the circumstance that the emissions are discharged at both ends of the exhaust passage formed by the protecting component 11, the emissions will not affect the outermost battery cell 20, so that thermal diffusion is avoided. On the other hand, both ends of the exhaust passage formed by the protecting component 11 can be collected to the gathering area, respectively, to gather the emissions in a centralized manner.

As shown in FIGs. 4-6, the first connecting portion 114 corresponds to an area between the pressure relief mechanism 212 and the first electrode terminal 211a; and/or the second connecting portion 115 corresponds to an area between the pressure relief mechanism 212 and the second electrode terminal 211b. The first connecting portion 114 and the second connecting portion 115 are arranged between the corresponding electrode terminals 211 and the pressure relief mechanisms 212, respectively, to utilize the space reasonably, so that the exhaust passage formed by the protecting component 11 can cover the pressure relief mechanisms 212, without affecting the installation of the electrode terminals 211, thereby preventing short circuiting.

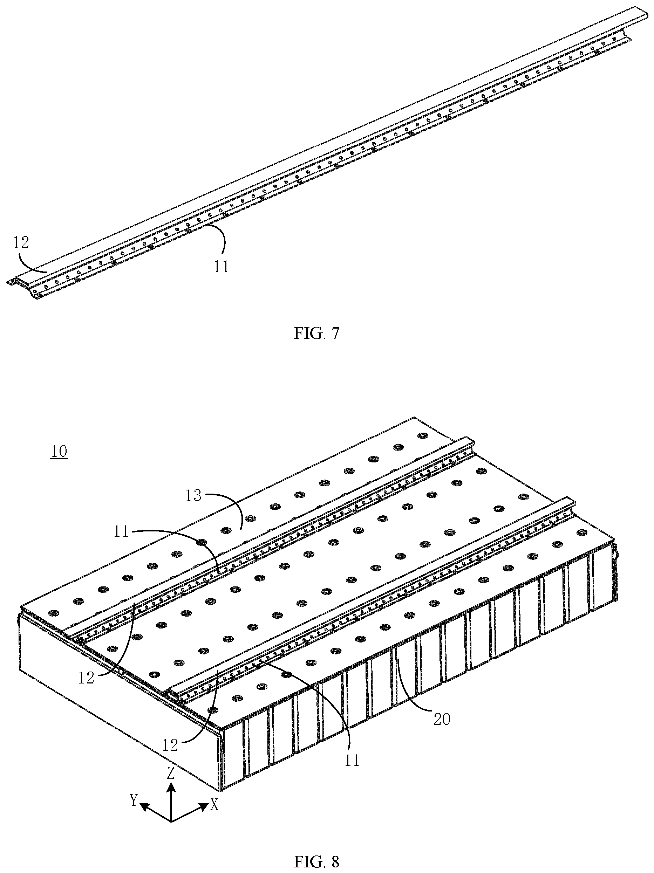

In some embodiments, the fire fighting pipeline 12 is arranged on a side, away from the battery cells 20, of the top wall 111. FIG. 7 illustrates a schematic diagram when the fire fighting pipeline 12 in the embodiment of the present application is arranged outside the top wall 111. FIG. 8 illustrates a schematic diagram of a partial structure of the battery 10 when the fire fighting pipeline 12 is arranged outside the protecting component 11. FIG. 7 shows the protecting component 11 and the fire fighting pipeline 12 in FIG. 8. As shown in FIG. 7 and FIG. 8, the fire fighting pipeline 12 may be fixed relative to the top wall 111 of the protecting component 11. For example, the fire fighting pipeline 12 may be fixed to the surface of a side, away from the battery cell 10, of the top wall 111 through an adhesive. Thus, the fire fighting pipeline 12 is not independently fixed by using an extra fixing structure. Particularly under the circumstance that the wall of the fire fighting pipeline 12 is smooth, the difficulty of fixing the fire fighting pipeline 12 by arranging the buckle and the like is great, and the fire fighting pipeline 12 fixed by the protecting component 11 is processed and assembled more conveniently.

In the embodiment of the present application, as shown in FIG. 7 and FIG. 8, under the circumstance that the fire fighting pipeline 12 is arranged on the side, away from the battery cells 20, of the top wall 111, the top wall 111 is provided with the plurality of pressure relief areas 1111; the plurality of pressure relief areas 1111 are in a one-to-one correspondence to the pressure relief mechanisms 212 of the plurality of battery cells 20; and the pressure relief areas 1111 are configured to enable the emissions from the battery cells 20 to destroy the fire fighting pipeline 12 through the pressure relief areas 1111 when the pressure relief mechanisms 212 actuate. That is to say, when thermal runaway does not occur on the battery cell 20, the fire fighting pipeline 12 is fixed relative to the top wall 111 and is more stable, so that the integral rigidity of the fire fighting pipeline 12 can be improved through the protecting component 11, and thus, the fire fighting pipeline 12 is prevented from deviating. Particularly when the pressure relief mechanism 212 actuates, the discharged emissions can be excluded through the exhaust passage formed by the protecting component 11, so that the discharged emissions can rapidly and accurately destroy the fire fighting pipeline 12 through the pressure relief areas 1111, and the fire fighting medium in the fire fighting pipeline 12 can cool the battery timely to prevent diffusion of thermal runaway.

The length of the pressure relief areas 1111 in the second direction Y is less than or equal to that of the fire fighting pipeline 12 in the second direction Y, the second direction Y being perpendicular to the first direction X and parallel to the first wall 21. For example, the pressure relief areas 1111 may be round areas, so that the diameter of the pressure relief areas 1111 may be set to be less than the length of the fire fighting pipeline 12 in the second direction Y. The size of the pressure relief area 1111 shall not be too large, so that a condition that other components in the battery 10 are affected since the oversized emissions fly away in the pressure relief area 1111 is avoided. Moreover, if the pressure relief area 1111 is oversized, when the pressure relief mechanism 212 actuates, the pressure relief area 1111 in a large area will be destroyed, the exhaust passage formed by the protecting component 11 fails, and the emissions cannot be discharged directionally, so that the safety of the battery 10 is affected.

It should be understood that the difference between the embodiment shown in FIG. 7 and FIG. 8 and the embodiment shown in FIGs. 4-7 lies in the relative positions of the fire fighting pipeline 12 and the protecting component 11. For other descriptions, the embodiment shown in FIG. 7 and FIG. 8 is suitable for the embodiment shown in FIG. 4 to FIG. 7. For simplicity, it is not repeatedly described herein.

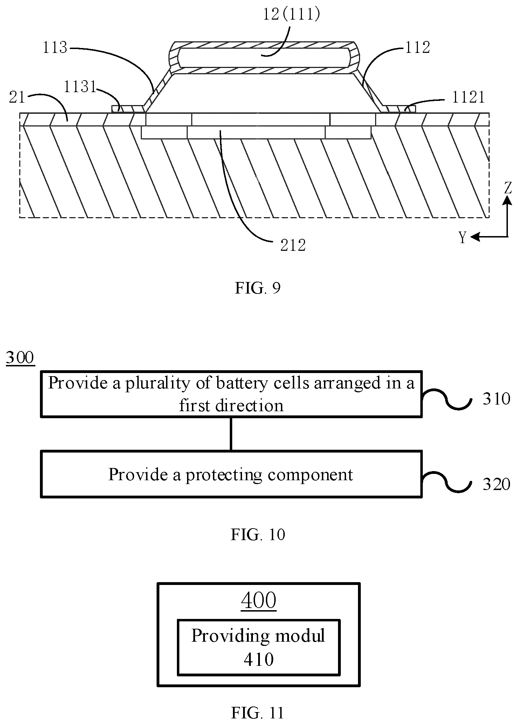

It should be understood that there may be other positional relations between the fire fighting pipeline 12 and the protecting component 11 in the embodiment of the present application. For simplicity, it is not repeatedly described herein. For example, in some embodiments, the fire fighting pipeline 12 is the top wall 111. FIG. 9 is a schematic diagram of another partial section of a battery 10 in the embodiment of the present application. The section is a section perpendicular to the first direction X. As shown in FIG. 9, different from the abovementioned embodiments, the fire fighting pipeline 12 may further replace the top wall 111 of the protecting component 11, i.e., the protecting component 11 includes the fire fighting pipeline 12, the first side wall 112 and the second side wall 113. The fire fighting pipeline 12 is connected to the first side wall 112 and the second side wall 113. The protecting component 11 and the fire fighting pipeline 12 are combined into an integrated structure, which not only facilitates processing, but also saves the original space where the top wall 111 is arranged, thereby improving the spatial utilization ratio.

Specifically, the first side wall 112 may be located in any position of the fire fighting pipeline 12. For example, the first side wall may be located at the bottom left corner shown in FIG. 9 or at the top left corner or the middle position of the left side wall. Similarly, the second side wall 113 may be located in any position of the fire fighting pipeline 12. For example, the second side wall may be located at the bottom right corner shown in FIG. 9 or at the top right corner or the middle position of the right side wall, but the embodiment of the present application is not limited thereto.

In the above embodiments of the present application, the description is made by taking a condition that the protecting component 11 is located on a side, away from the first wall 21, of the wire harness segregation board 13 as an example. Alternatively, the protecting component 11 may further be located in other positions, which is not repeatedly described herein. For example, the protecting component 11 may further be located between the wire harness segregation board 13 and the first wall 21 to fix at least part of areas of the protecting component 11 through at least part of areas of the wire harness segregation board 13. Specifically, the wire harness segregation board 13 may include an opened area. The protecting component 11 at least partially protrudes out of the surface of the wire harness segregation board 13 through the opened area. The first connecting portion 114 and the second connecting portion 115 of the protecting component 11 are clamped between the edge of the opened area of the wire harness segregation board 13 and the first wall 21 to fix the protecting component 11.

For further example, the battery 10 may further not include the wire harness segregation board 13. The protecting component 11 may be arranged on the surface of the interior, away from the battery cell 20, of the first wall 21. For example, the converging component arranged on the surface of the first wall 21 fixes the protecting component 11 to reduce the component arranged on the surface of the interior, away from the battery cell 20, of the first wall 21.

The battery 10 and the electricity consumption device in the embodiment of the present application are described above. The method and device for manufacturing the battery 10 in the embodiment of the present application will be described below, with parts which are not described in detail in the abovementioned embodiments.

FIG. 10 illustrates a schematic flow diagram of a method 300 for manufacturing the battery 10 in an embodiment of the present application. As shown in FIG. 10, the method 300 may include: S310: providing a plurality of battery cells 20 arranged in a first direction X, where a first wall 21 of each of the battery cells 20 is provided with a pressure relief mechanism 212 configured to actuate to relieve a pressure inside the battery cell 20 when the pressure or a temperature inside the battery cell 20 reaches a threshold; and S320: providing a protecting component 11, where the protecting component 11 covers the pressure relief mechanisms 212 of the plurality of battery cells 20 outside the plurality of battery cells 20 and forms an exhaust passage with the first walls 21 of the plurality of battery cells 20, and the exhaust passage is configured to discharge emissions discharged by the pressure relief mechanisms 212 from both ends of the exhaust passage in the first direction X when the pressure relief mechanisms 212 actuate.

FIG. 11 illustrates a schematic flow diagram of a device 400 for manufacturing the battery 10 in an embodiment of the present application. As shown in FIG. 11, the device 400 may include a providing module 410, configured to: provide a plurality of battery cells 20 arranged in a first direction X, where a first wall 21 of each of the battery cells 20 is provided with a pressure relief mechanism 212 configured to actuate to relieve a pressure inside the battery cell 20 when the pressure or a temperature inside the battery cell 20 reaches a threshold; and providing a protecting part 11, where the protecting part 11 covers the pressure relief mechanisms 212 of the plurality of battery cells 20 outside the plurality of battery cells 20 and forms an exhaust passage with the first walls 21 of the plurality of battery cells 20, and the exhaust passage is configured to discharge emissions discharged by the pressure relief mechanisms 212 from both ends of the exhaust passage in the first direction X when the pressure relief mechanisms 212 actuate.

Although the present application has been described with reference to preferred embodiments, various improvements can be made thereto without departing from the scope of the present application. In particular, provided no structural conflict exists, the technical features mentioned in the embodiments can be combined in any way. The present application is not restricted to particular embodiments disclosed herein, but to comprise all technical solutions falling in the scope of the claims.

## Claims

1. A battery, comprising:
a plurality of battery cells (20) arranged in a first direction, wherein a first wall (21) of each of the battery cells (20) is provided with a pressure relief mechanism (212) configured to actuate to relieve a pressure inside the battery cell (20) when the pressure or a temperature inside the battery cell (20) reaches a threshold; and
a protecting component (11), wherein the protecting component (11) covers the pressure relief mechanisms (212) of the plurality of battery cells (20) outside the plurality of battery cells (20) and forms an exhaust passage with the first walls (21) of the plurality of battery cells (20), and the exhaust passage is configured to discharge emissions discharged by the pressure relief mechanisms (212) from both ends of the exhaust passage in the first direction when the pressure relief mechanisms (212) actuate; and
a wire harness segregation board (13), arranged on a surface, facing an exterior of the battery cell (20), of the first wall (21);
wherein the protecting component (11) comprises a top wall (111), a first side wall (112), and a second side wall (113); the top wall (111) is arranged opposite to the pressure relief mechanisms (212) of the plurality of battery cells (20); the top wall (111) is configured to connect the first side wall (112) and the second side wall (113); and the first side wall (112) and the second side wall (113) are connected to the wire harness segregation board (13), respectively; **characterised in that** a value range of an included angle between the first side wall (112) and the wire harness segregation board (13) is [30°, 90°]; and/or
a value range of an included angle between the second side wall (113) and the wire harness segregation board (13) is [30°, 90°].

2. The battery according to claim 1, further comprising:
a fire fighting pipeline (12), configured to accommodate a fire fighting medium and to discharge the fire fighting medium when the pressure relief mechanisms (212) actuate; and optionally
wherein the protecting component (11) is further configured to limit a position of the fire fighting pipeline (12).

3. The battery according to claim 2, wherein the fire fighting pipeline (12) is arranged corresponding to the pressure relief mechanisms (212) of the plurality of battery cells (20) and extends in the first direction.

4. The battery according to any preceding claim, wherein:
the first side wall (112) and/or the second side wall (113) are provided with a plurality of first through holes (1121, 1131), and the first through holes (1121, 1131) are configured to relieve the pressures inside the battery cells (20) when the pressure mechanisms (212) actuate, wherein, optionally, a diameter of the first through holes (1121, 1131) is less than or equal to 10 mm.

5. The battery according to claims 2-4, wherein:
the fire fighting pipeline (12) is arranged on a side, close to the battery cells (20), of the top wall (111); or
the fire fighting pipeline (12) is arranged on a side of the top wall (111) away from the battery cells (20); the top wall (111) is provided with a plurality of pressure relief areas (1111); the plurality of pressure relief areas (1111) are in a one-to-one correspondence to the pressure relief mechanisms (212) of the plurality of battery cells (20); and the pressure relief areas (1111) are configured to enable the emissions from the battery cells (20) to destroy the fire fighting pipeline (12) through the pressure relief areas (1111) when the pressure relief mechanisms (212) actuate; or
wherein the fire fighting pipeline (12) is the top wall (111).

6. The battery according to claims 2-5, wherein the fire fighting pipeline (12) is arranged on a side of the top wall (111) away from the battery cells (20); the top wall (111) is provided with a plurality of pressure relief areas (1111); the plurality of pressure relief areas (1111) are in a one-to-one correspondence to the pressure relief mechanisms (212) of the plurality of battery cells (20); and the pressure relief areas (1111) are configured to enable the emissions from the battery cells (20) to destroy the fire fighting pipeline (12) through the pressure relief areas (1111) when the pressure relief mechanisms (212) actuate, and wherein:
each of the pressure relief areas (1111) is a weak area on the top wall (111), and the weak area is configured to be destroyed by the emissions from the battery cells (20) when the pressure relief mechanisms (212) actuate; or
the pressure relief area (1111) is a second through hole in the top wall (111).

7. The battery according to claims 2-6, wherein the fire fighting pipeline (12) is arranged on a side of the top wall (111) away from the battery cells (20); the top wall (111) is provided with a plurality of pressure relief areas (1111); the plurality of pressure relief areas (1111) are in a one-to-one correspondence to the pressure relief mechanisms (212) of the plurality of battery cells (20); and the pressure relief areas (1111) are configured to enable the emissions from the battery cells (20) to destroy the fire fighting pipeline (12) through the pressure relief areas (1111) when the pressure relief mechanisms (212) actuate and wherein a length of the pressure relief area (1111) in a second direction is less than or equal to that of the fire fighting pipeline (12) in the second direction, the second direction being perpendicular to the first direction and parallel to the first wall (21); and optionally, wherein
each of the pressure relief areas (1111) is a weak area on the top wall (111), and the weak area is configured to be destroyed by the emissions from the battery cells (20) when the pressure relief mechanisms (212) actuate; or
the pressure relief area (1111) is a second through hole in the top wall (111).

8. The battery according to any preceding claim, wherein an end, close to the wire harness segregation board (13), of the first side wall (112) is provided with a first connecting portion (114), the first connecting portion (114) is parallel to the wire harness segregation board (13), and the first side wall (112) is fixed to the wire harness segregation board (13) through the first connecting portion (114); and/or
an end, close to the wire harness segregation board (13), of the second side wall (113) is provided with a second connecting portion (115), the second connecting portion (115) is parallel to the wire harness segregation board (13), and the second side wall (113) is fixed to the wire harness segregation board (13) through the second connecting portion (115).

9. The battery according to claim 8, wherein the first connecting portion (114) is connected to the wire harness segregation board (13) by way of at least one of the following modes: buckle connection, threaded connection and welding; and/or
the second connecting portion (115) is connected to the wire harness segregation board (13) by way of at least one of the following modes: buckle connection, threaded connection and welding.

10. The battery according to claim 8 or 9, wherein the first wall (21) is provided with a first electrode terminal (211a) and a second electrode terminal (211b), the first electrode terminal (211a) and the second electrode terminal (211b) are located on both sides of the pressure relief mechanism (212) in the second direction, respectively, the second direction being perpendicular to the first direction and parallel to the first wall (21);
the first connecting portion (114) corresponds to an area between the pressure relief mechanism (212) and the first electrode terminal (211a); and/or
the second connecting portion (115) corresponds to an area between the pressure relief mechanism (212) and the second electrode terminal (211b).

11. The battery according to any one of claims 1-10, wherein a length of the protecting component (11) in the first direction is greater than or equal to a total length of the plurality of battery cells (20) in the first direction, and/or wherein a material of the protecting part (11) comprises the following at least one of a metal, a mica, a glass fiber and a ceramic.

12. An electricity consumption device, comprising:
the battery according to any one of claims 1 to 11, the battery being configured to provide electric energy.

## Patentansprüche

1. Batterie, umfassend:
eine Vielzahl von Batteriezellen (20), die in einer ersten Richtung angeordnet sind, wobei eine erste Wand (21) jeder der Batteriezellen (20) mit einem Druckentlastungsmechanismus (212) versehen ist, der konfiguriert ist, um betätigt zu werden, um einen Druck im Inneren der Batteriezelle (20) zu entlasten, wenn der Druck oder eine Temperatur im Inneren der Batteriezelle (20) einen Schwellenwert erreicht; und
einer Schutzkomponente (11), wobei die Schutzkomponente (11) die Druckentlastungsmechanismen (212) der Vielzahl von Batteriezellen (20) außerhalb der Vielzahl von Batteriezellen (20) abdeckt und mit den ersten Wänden (21) der Vielzahl von Batteriezellen (20) einen Auslasskanal bildet, und der Auslasskanal konfiguriert ist, um Emissionen, die von den Druckentlastungsmechanismen (212) abgegeben werden, an beiden Enden des Auslasskanals in die erste Richtung abzugeben, wenn die Druckentlastungsmechanismen (212) betätigt werden; und
eine Kabelbaumtrennplatte (13), die auf einer Oberfläche, die einer Außenseite der Batteriezelle (20) zugewandt ist, der ersten Wand (21) angeordnet ist;
wobei die Schutzkomponente (11) eine obere Wand (111), eine erste Seitenwand (112) und eine zweite Seitenwand (113) umfasst; die obere Wand (111) gegenüber den Druckentlastungsmechanismen (212) der Vielzahl von Batteriezellen (20) angeordnet ist; die obere Wand (111) konfiguriert ist, um die erste Seitenwand (112) und die zweite Seitenwand (113) zu verbinden; und die erste Seitenwand (112) und die zweite Seitenwand (113) jeweils mit der Kabelbaumtrennplatte (13) verbunden sind;
**dadurch gekennzeichnet, dass** ein Wertebereich eines eingeschlossenen Winkels zwischen der ersten Seitenwand (112) und der Kabelbaumtrennplatte (13) [30°, 90°] beträgt; und/oder ein Wertebereich eines eingeschlossenen Winkels zwischen der zweiten Seitenwand (113) und der Kabelbaumtrennplatte (13) [30°, 90°] beträgt.

2. Batterie nach Anspruch 1, ferner umfassend:
eine Feuerlöschleitung (12), die konfiguriert ist, um ein Feuerlöschmedium aufzunehmen und das Feuerlöschmedium abzugeben, wenn die Druckentlastungsmechanismen (212) betätigt werden; und
optional wobei die Schutzkomponente (11) ferner konfiguriert ist, um eine Position der Feuerlöschleitung (12) zu begrenzen.

3. Batterie nach Anspruch 2, wobei die Feuerlöschleitung (12) entsprechend den Druckentlastungsmechanismen (212) der Vielzahl von Batteriezellen (20) angeordnet ist und sich in der ersten Richtung erstreckt.

4. Batterie nach einem der vorstehenden Ansprüche, wobei:
die erste Seitenwand (112) und/oder die zweite Seitenwand (113) mit einer Vielzahl von ersten Durchgangsöffnungen (1121, 1131) versehen sind, und die ersten Durchgangsöffnungen (1121, 1131) konfiguriert sind, um die Drücke im Inneren der Batteriezellen (20) zu entlasten, wenn die Druckentlastungsmechanismen (212) betätigt werden,
wobei optional ein Durchmesser der ersten Durchgangsöffnungen (1121, 1131) kleiner oder gleich 10 mm ist.

5. Batterie nach Ansprüchen 2 bis 4, wobei:
die Feuerlöschleitung (12) an einer Seite der oberen Wand (111) in der Nähe der Batteriezellen (20) angeordnet ist; oder die Feuerlöschleitung (12) an einer von den Batteriezellen (20) abgewandten Seite der oberen Wand (111) angeordnet ist; die obere Wand (111) mit einer Vielzahl von Druckentlastungsbereichen (1111) versehen ist;
die Vielzahl von Druckentlastungsbereichen (1111) in einer Eins-zu-Eins-Entsprechung zu den Druckentlastungsmechanismen (212) der Vielzahl von Batteriezellen (20) steht; und die Druckentlastungsbereiche (1111) konfiguriert sind, um den Emissionen aus den Batteriezellen (20) zu ermöglichen, die Feuerlöschleitung (12) durch die Druckentlastungsbereiche (1111) zu zerstören, wenn die Druckentlastungsmechanismen (212) betätigt werden; oder
wobei die Feuerlöschleitung (12) die obere Wand (111) ist.

6. Batterie nach Ansprüchen 2 bis 5,
wobei die Feuerlöschleitung (12) an einer von den Batteriezellen (20) abgewandten Seite der oberen Wand (111) angeordnet ist; die obere Wand (111) mit einer Vielzahl von Druckentlastungsbereichen (1111) versehen ist; die Vielzahl von Druckentlastungsbereichen (1111) in einer Eins-zu-Eins-Entsprechung zu den Druckentlastungsmechanismen (212) der Vielzahl von Batteriezellen (20) steht; und die Druckentlastungsbereiche (1111) konfiguriert sind, um den Emissionen aus den Batteriezellen (20) zu ermöglichen, die Feuerlöschleitung (12) durch die Druckentlastungsbereiche (1111) zu zerstören, wenn die Druckentlastungsmechanismen (212) betätigt werden, und wobei:
jeder der Druckentlastungsbereiche (1111) ein Schwachbereich an der oberen Wand (111) ist und der Schwachbereich konfiguriert ist, um durch die Emissionen aus den Batteriezellen (20) zerstört zu werden, wenn die Druckentlastungsmechanismen (212) betätigt werden; oder
der Druckentlastungsbereich (1111) ein zweites Durchgangsloch in der oberen Wand (111) ist.

7. Batterie nach Ansprüchen 2 bis 6,
wobei die Feuerlöschleitung (12) an einer von den Batteriezellen (20) abgewandten Seite der oberen Wand (111) angeordnet ist; die obere Wand (111) mit einer Vielzahl von Druckentlastungsbereichen (1111) versehen ist; die Vielzahl von Druckentlastungsbereichen (1111) in einer Eins-zu-Eins-Entsprechung zu den Druckentlastungsmechanismen (212) der Vielzahl von Batteriezellen (20) steht; und die Druckentlastungsbereiche (1111) konfiguriert sind, um den Emissionen aus den Batteriezellen (20) zu ermöglichen, die Feuerlöschleitung (12) durch die Druckentlastungsbereiche (1111) zu zerstören, wenn die Druckentlastungsmechanismen (212) betätigt werden, und wobei eine Länge des Druckentlastungsbereichs (1111) in einer zweiten Richtung kleiner oder gleich jener der Feuerlöschleitung (12) in der zweiten Richtung ist, wobei die zweite Richtung senkrecht zur ersten Richtung und parallel zur ersten Wand (21) verläuft; und optional, wobei jeder der Druckentlastungsbereiche (1111) ein Schwachbereich an der oberen Wand (111) ist und der Schwachbereich konfiguriert ist, um durch die Emissionen aus den Batteriezellen (20) zerstört zu werden, wenn die Druckentlastungsmechanismen (212) betätigt werden; oder
der Druckentlastungsbereich (1111) ein zweites Durchgangsloch in der oberen Wand (111) ist.

8. Batterie nach einem der vorstehenden Ansprüche, wobei ein Ende der ersten Seitenwand (112), das nahe der Kabelbaumtrennplatte (13) liegt, mit einem ersten Verbindungsabschnitt (114) versehen ist, der erste Verbindungsabschnitt (114) parallel zur Kabelbaumtrennplatte (13) verläuft und die erste Seitenwand (112) über den ersten Verbindungsabschnitt (114) an der Kabelbaumtrennplatte (13) fixiert ist; und/oder
ein Ende der zweiten Seitenwand (113), das nahe der Kabelbaumtrennplatte (13) liegt, mit einem zweiten Verbindungsabschnitt (115) versehen ist, der zweite Verbindungsabschnitt (115) parallel zur Kabelbaumtrennplatte (13) verläuft und die zweite Seitenwand (113) über den zweiten Verbindungsabschnitt (115) an der Kabelbaumtrennplatte (13) fixiert ist.

9. Batterie nach Anspruch 8, wobei der erste Verbindungsabschnitt (114) über mindestens eine der folgenden Modi mit der Kabelbaumtrennplatte (13) verbunden ist: Schnallenverbindung, Schraubverbindung und Schweißverbindung; und/oder der zweite Verbindungsabschnitt (115) über mindestens eine der folgenden Modi mit der Kabelbaumtrennplatte (13) verbunden ist: Schnallenverbindung, Schraubverbindung und Schweißverbindung.

10. Batterie nach Anspruch 8 oder 9, wobei die erste Wand (21) mit einem ersten Elektrodenanschluss (211a) und einem zweiten Elektrodenanschluss (211b) versehen ist, wobei sich der erste Elektrodenanschluss (211a) und der zweite Elektrodenanschluss (211b) jeweils auf beiden Seiten des Druckentlastungsmechanismus (212) in der zweiten Richtung befinden, wobei die zweite Richtung senkrecht zur ersten Richtung und parallel zur ersten Wand (21) verläuft;
der erste Verbindungsabschnitt (114) einem Bereich zwischen dem Druckentlastungsmechanismus (212) und dem ersten Elektrodenanschluss (211a) entspricht; und/oder
der zweite Verbindungsabschnitt (115) einem Bereich zwischen dem Druckentlastungsmechanismus (212) und dem zweiten Elektrodenanschluss (211b) entspricht.

11. Batterie nach einem der Ansprüche 1 bis 10, wobei eine Länge der Schutzkomponente (11) in der ersten Richtung größer oder gleich einer Gesamtlänge der Vielzahl von Batteriezellen (20) in der ersten Richtung ist, und/oder wobei ein Material der Schutzkomponente (11) mindestens eines der folgenden von Metall, Glimmer, Glasfaser und Keramik umfasst.

12. Stromverbrauchsvorrichtung, umfassend:
die Batterie nach einem der Ansprüche 1 bis 11, wobei die Batterie konfiguriert ist, um elektrische Energie bereitzustellen.

## Revendications

1. Batterie, comprenant :
une pluralité de cellules de batterie (20) agencées dans une première direction, une première paroi (21) de chacune des cellules de batterie (20) étant pourvue d'un mécanisme de libération de pression (212) conçu pour s'activer afin de libérer une pression à l'intérieur de la cellule de batterie (20) lorsque la pression ou une température à l'intérieur de la cellule de batterie (20) atteint un seuil ; et
un composant de protection (11), le composant de protection (11) couvrant les mécanismes de libération de pression (212) de la pluralité de cellules de batterie (20) à l'extérieur de la pluralité de cellules de batterie (20) et formant un passage d'échappement avec les premières parois (21) de la pluralité de cellules de batterie (20), et le passage d'échappement étant conçu pour évacuer des émissions évacuées par les mécanismes de libération de pression (212) par les deux extrémités du passage d'échappement dans la première direction quand les mécanismes de libération de pression (212) s'activent ; et
une plaque de séparation de faisceau de câbles (13), agencée sur une surface, qui fait face à un extérieur de la cellule de batterie (20), de la première paroi (21) ;
dans laquelle le composant de protection (11) comprend une paroi supérieure (111), une première paroi latérale (112), et une deuxième paroi latérale (113) ; la paroi supérieure (111) est agencée à l'opposé des mécanismes de libération de pression (212) de la pluralité de cellules de batterie (20) ; la paroi supérieure (111) est conçue pour raccorder la première paroi latérale (112) et la deuxième paroi latérale (113) ; et la première paroi latérale (112) et la deuxième paroi latérale (113) sont raccordées à la plaque de séparation de faisceau de câbles (13), respectivement ; **caractérisée en ce que**
une plage de valeur d'un angle inclus entre la première paroi latérale (112) et la plaque de séparation de faisceau de câble (13) est [30°, 90°] ; et/ou
une plage de valeur d'un angle inclus entre la deuxième paroi latérale (113) et la plaque de séparation de faisceau de câble (13) est [30°, 90°].

2. Batterie selon la revendication 1 comprenant en outre :
une conduite de lutte contre le feu (12), conçue pour recevoir un fluide de lutte contre le feu et pour évacuer le fluide de lutte contre le feu quand les mécanismes de libération de pression (212) s'activent ; et éventuellement
dans laquelle le composant de protection (11) est en outre conçu pour limiter une position de la conduite de lutte contre le feu (12).

3. Batterie selon la revendication 2, dans laquelle la conduite de lutte contre le feu (12) est agencée en correspondance avec les mécanismes de libération de pression (212) de la pluralité de cellules de batterie (20) et s'étend dans la première direction.

4. Batterie selon l'une quelconque des revendications précédentes, dans laquelle :
la première paroi latérale (112) et/ou la deuxième paroi latérale (113) sont pourvues d'une pluralité de premiers trous traversants (1121, 1131), et les premiers trous traversants (1121, 1131) sont conçus pour libérer les pressions à l'intérieur des cellules de batterie (20) quand les mécanismes de pression (212) s'activent, un diamètre des premiers trous traversants (1121, 1131) étant éventuellement inférieur ou égal à 10 mm.

5. Batterie selon les revendications 2 à 4, dans laquelle :
la conduite de lutte contre le feu (12) est agencée sur un côté, proche des cellules de batterie (20), de la paroi supérieure (111) ; ou
la conduite de lutte contre le feu (12) est agencée sur un côté de la paroi supérieure (111) éloigné des cellules de batterie (20) ; la paroi supérieure (111) est pourvue d'une pluralité de zone de libération de pression (1111) ; la pluralité de zones de libération de pression (1111) sont en correspondance biunivoque avec les mécanismes de libération de pression (212) de la pluralité de cellules de batterie (20) ; et les zones de libération de pression (1111) sont conçues pour permettre que les émissions provenant des cellules de batterie (20) détruisent la conduite de lutte contre le feu (12) à travers les zones de libération de pression (1111) quand les mécanismes de libération de pression (212) s'activent ; ou
la conduite de lutte contre le feu (12) étant la paroi supérieure (111).

6. Batterie selon les revendications 2 à 5, dans laquelle la conduite de lutte contre le feu (12) est agencée sur un côté de la paroi supérieure (111) éloigné des cellules de batterie (20) ; la paroi supérieure (111) est pourvue d'une pluralité de zone de libération de pression (1111) ; la pluralité de zones de libération de pression (1111) sont en correspondance biunivoque avec les mécanismes de libération de pression (212) de la pluralité de cellules de batterie (20) ; et les zones de libération de pression (1111) sont conçues pour permettre que les émissions provenant des cellules de batterie (20) détruisent la conduite de lutte contre le feu (12) à travers les zones de libération de pression (1111) quand les mécanismes de libération de pression (212) s'activent, et dans laquelle :
chacune des zones de libération de pression (1111) est une zone faible sur la paroi supérieure (111), et la zone faible est conçue pour être détruite par les émissions des cellules de batterie (20) quand les mécanismes de libération de pression (212) s'activent ; ou
la zone de libération de pression (1111) est un deuxième trou traversant dans la paroi supérieure (111).

7. Batterie selon les revendications 2 à 6, dans laquelle la conduite de lutte contre le feu (12) est agencée sur un côté de la paroi supérieure (111) éloigné des cellules de batterie (20) ; la paroi supérieure (111) est pourvue d'une pluralité de zone de libération de pression (1111) ; la pluralité de zones de libération de pression (1111) sont en correspondance biunivoque avec les mécanismes de libération de pression (212) de la pluralité de cellules de batterie (20) ; et les zones de libération de pression (1111) sont conçues pour permettre que les émissions provenant des cellules de batterie (20) détruisent la conduite de lutte contre le feu (12) à travers les zones de libération de pression (1111) quand les mécanismes de libération de pression (212) s'activent, et dans laquelle une longueur de la zone de libération de pression (1111) dans une deuxième direction est inférieure ou égale à celle de la conduite de lutte contre le feu (12) dans la deuxième direction, la deuxième direction étant perpendiculaire à la première direction et parallèle à la première paroi (21) ; et éventuellement, dans laquelle
chacune des zones de libération de pression (1111) est une zone faible sur la paroi supérieure (111), et la zone faible est conçue pour être détruite par les émissions des cellules de batterie (20) quand les mécanismes de libération de pression (212) s'activent ; ou
la zone de libération de pression (1111) est un deuxième trou traversant dans la paroi supérieure (111).

8. Batterie selon l'une quelconque des revendications précédentes, dans laquelle une extrémité, proche de la plaque de séparation de faisceau de câbles (13), de la première paroi latérale (112) est pourvue d'une première partie de raccordement (114), la première partie de raccordement (114) est parallèle à la plaque de séparation de faisceau de câble (13), et la première paroi latérale (112) est fixée à la plaque de séparation de faisceau de câble (13) à travers la première partie de raccordement (114) ; et/ou
une extrémité, proche de la plaque de séparation de faisceau de câbles (13), de la deuxième paroi latérale (113) est pourvue d'une deuxième partie de raccordement (115), la deuxième partie de raccordement (115) est parallèle à la plaque de séparation de faisceau de câble (13), et la deuxième paroi latérale (113) est fixée à la plaque de séparation de faisceau de câble (13) à travers la deuxième partie de raccordement (115).

9. Batterie selon la revendication 8, dans laquelle la première partie de raccordement (114) est raccordée à la carte de séparation de faisceau de câble (13) au moyen d'au moins l'un des modes suivants : une connexion à boucle, une connexion filetée et un soudage ; et/ou
la deuxième partie de raccordement (115) est raccordée à la carte de séparation de faisceau de câble (13) au moyen d'au moins l'un des modes suivants : une connexion à boucle, une connexion filetée et un soudage.

10. Batterie selon la revendication 8 ou 9, dans laquelle la première paroi (21) est pourvue d'une première borne d'électrode (211a) et d'une deuxième borne d'électrode (211b), la première borne d'électrode (211a) et la deuxième borne d'électrode (211b) sont situées de part et d'autre du mécanisme de libération de pression (212) dans la deuxième direction, respectivement, la deuxième direction étant perpendiculaire à la première direction et parallèle à la première paroi (21) ;
la première partie de raccordement (114) correspond à une zone entre le mécanisme de libération de pression (212) et la première borne d'électrode (211a) ; et/ou
la deuxième partie de raccordement (115) correspond à une zone entre le mécanisme de libération de pression (212) et la deuxième borne d'électrode (211b).

11. Batterie selon l'une quelconque des revendications 1 à 10, dans laquelle une longueur du composant de protection (11) dans la première direction est supérieure ou égale à une longueur totale de la pluralité de cellules de batterie (20) dans la première direction, et/ou dans laquelle un matériau de la pièce de protection (11) comprend au moins l'un parmi les suivants un métal, un mica, une fibre de verre et une céramique.

12. Dispositif de consommation d'électricité, comprenant :
la batterie selon l'une quelconque des revendications 1 à 11, la batterie étant conçue pour fournir de l'énergie électrique.
